# EUROPEAN PATENT APPLICATION

(11) **EP 1 748 432 A2**
(43) Date of publication of application: **31.01.2007**
(21) Application number: 06015697.3
(22) Date of filing: 27.07.2006
(51) Int. Cl.: G11B 7/243, G11B 7/257

(54) **Optical recording medium**

(30) Priority: 29.07.2005 JP 2005220825
(71) Applicant: TDK Corporation, Chuo-ku, Tokyo 103-8272 (JP)
(72) Inventor: Shingai, Hiroshi, Tokyo 103-8272 (JP)
(74) Representative: Emde, Eric

(57) **Abstract**

An optical recording medium has a substrate, a first information layer which is provided in a beam incident side of the substrate, and a second information layer which serves as the semi-transparent information layer and is provided in a beam incident side of the first information layer, the second information layer is configured to include: a recording film formed from a phase-change material which is rewritable by means of an optical system in which λ / NA ≤ 650 nm, NA being the numerical aperture of an objective lens, λ being a wavelength of a laser beam; and an interface layer which is provided adjacent to a beam incident side of the recording film, the interface layer is formed from ZnS, SiO₂, and Cr₂O₃, the recording film contains Sb as a main component and Ge as a minor component, and in the optical recording medium, high speed recording to a semi-transparent information layer is achieved without excessively increasing the power of a laser, deteriorating the thermal stability of an amorphous mark, and causing peeling of a film.

## Description

The present invention relates to an optical recording medium referred to as a next generation DVD (Digital Versatile Disc).

As a next generation DVD, an optical recording medium has been proposed which utilizes a laser wavelength λ of 405 nm (blue color) and an optical system having a numerical aperture NA of an objective lens of 0.85. Further, a rewritable optical recording medium has been commercialized which has two information layers on one side and employs a rewrite speed of 1X (a linear velocity of approximately 5.0 m/s). In addition to the above, a next generation DVD is known which employs a standard in which a laser wavelength λ of 405 nm and a numerical aperture NA of 0.65 are employed.

In such next generation DVDs, there has been a demand for a further increase in storage capacity and in recording speed.

In such optical recording mediums having two or even more information layers in one side as mentioned above, an information layer other than the information layer located farthest from a laser beam incident surface is designed to be semi-transparent in order to allow recording to and reproduction from the information layer located farthest from the beam incident surface.

In this case, the film thickness of a phase-change recording film contained in the information layer must be small. However, as the film thickness decreases, the crystallization rate and the erase ratio decrease, causing difficulty in erasing (crystallizing) a recording mark (amorphous). Thus, a problem arises in that rewriting speed is decreased.

Further, the reduction in the erase ratio as mentioned above becomes more significant as the time required for the spot of the laser beam to pass a point in the phase-change recording film is shortened. That is, the larger the linear velocity, the lower the erase ratio. Accordingly, the higher the density of an optical recording medium and the larger the capacity thereof, the more difficult it is to increase the rewriting speed.

As means for improving the crystallization rate of such a phase-change recording film as mentioned above, for example, Cr₂O₃ is employed for an interface layer of a phase-change recording film made of a compound-based phase-change material such as Ge₄Sb₂Te₇, as disclosed in Japanese Patent Laid-Open Publication No. 2003-228881. In this disclosed technique, it has been suggested that, since the diffusion of ZnS into the recording film is prevented, the number of rewritings and the crystallization rate can be effectively improved.

Studies for fast speed recording were conducted by employing a compound-based phase-change material such as GeSbTe or GeBiTe in a recording film of a semi-transparent information layer in a multi-layer optical recording medium. However, when a Cr₂O₃ interface layer was added, amorphous could not be crystallized (erased) at a linear velocity of 20 m/s (four times speed) by means of an optical system having NA = 0.85 (or 0.65) by use of a laser wavelength of 405 nm. Therefore, in the field of a next generation DVD, it has been difficult for a phase-change recording film of a semi-transparent information layer to be applicable to high speed recording at four times speed or higher when a compound-based material such as GeSbTe or GeBiTe is employed.

In view of the above, if a SbTe eutectic material containing Sb as a main component is employed for a phase-change recording film, the crystallization rate can be controlled by the content of Sb. In addition, since the melting point of this material is 600°C or less, which is lower than that of a compound based material, the power of a laser beam for forming an amorphous mark can be reduced.

However, if such a SbTe eutectic material is employed for a recording film, a problem arises in that, as the content of Sb is increased in order for the recording film to be applicable to high speed recording, crystallization activation energy decreases, causing the thermal stability of an amorphous mark to deteriorate.

In view of the above, the present inventor has formed a recording film of a phase-change material in a semi-transparent information layer from Sb and Ge as main components and Mg as an additive component and has configured an interface layer adjacent to a laser beam incident side of the recording film from Cr₂O₃. Consequently, the inventor has found that high speed recording can be achieved without excessively increasing laser power and without deteriorating the thermal stability of an amorphous mark and thus have filed a patent application as Japanese Patent Application No. 2005-095880.

However, if this optical recording medium is stored at high temperature and high humidity, the interface layer may peel off, causing a problem in that recording cannot be performed.

In view of the foregoing problems, various exemplary embodiments of this invention provide an optical recording medium in which high speed recording can be achieved without increasing the power of a laser for forming an amorphous mark and without deteriorating the thermal stability of the amorphous mark and in which peeling of an interface layer does not occur during storage at high temperature and high humidity.

The present inventor has conducted intensive studies and consequently found that, if the interface layer is formed from ZnS, SiO₂, and Cr₂O₃ instead of Cr₂O₃ as mentioned above, peeling of the interface layer does not occur during storage at high temperature and high humidity and that high speed recording can be achieved.

In summary, the above-described objectives are achieved by the following embodiments of the present invention.
(1) An optical recording medium comprising: a substrate; a first information layer provided in a laser beam incident side of the substrate; and at least one semi-transparent information layer provided in a beam incident side of the first information layer, the semi-transparent information layer being configured to include a recording film and an interface layer which is provided adjacent to a beam incident side of this recording film, the recording film being formed from a phase-change material which is rewritable by means of an optical system in which λ / NA ≤ 650 nm, NA being a numerical aperture of an objective lens, λ being a wavelength of a laser beam, whereinthe recording film contains Sb as a main component and at least Ge as a minor component, and the interface layer is formed from ZnS, SiO₂, and Cr₂O₃.
(2) The optical recording medium according to (1), wherein a content of Cr₂O₃ in the interface layer is 15 mol% or more and 90 mol% or less.
(3) The optical recording medium according to (1) or (2), wherein the recording film contains Sb in an amount of 77.2 at% or more and 88 at% or less and Ge in an amount of 9.9 at% or more and 21 at% or less.
(4) The optical recording medium according to any one of (1), (2) or (3), wherein the recording film contains Mg as an additive component in an amount of 1 at% or more and 3.9 at% or less.
(5) The optical recording medium according to any one of (1) to (4), wherein a film thickness of the interface layer is 0.4 nm or more and 9 nm or less.
(6) The optical recording medium according to any one of (1) to (4), wherein a film thickness of the interface layer is 0.5 nm or more and 8 nm or less.
(7) The optical recording medium according to any one of (1) to (6), wherein a composition of the interface layer is {(ZnS)_{0.8}(SiO₂)_{0.2}}_{(100-X)}(Cr₂O₃)_{X} and 39 ≤ X ≤ 86.

In the optical recording medium of the present invention, the recording film is formed from a SbGe eutectic alloy, and the interface layer made of ZnS, SiO₂, and Cr₂O₃ is formed in a laser beam incident side of the recording film. Hence, although it is a matter of conjecture that crystal nucleation from the interface of the recording film is facilitated by the interface layer, the crystals rapidly grow from the generated crystal nuclei, and thus crystallization time is reduced. Therefore, high speed recording can be achieved without increasing laser power and without deteriorating the thermal stability of the amorphous mark. Further, peeling of the interface layer does not occur even after storage at high temperature and high humidity.

Fig. 1 is a cross-sectional view schematically showing an optical recording medium according to Example 1 of the present invention;

Fig. 2 is a graph showing the relationship between the content of Cr₂O₃ in an interface layer of the optical recording medium of the Example 1 and a 4X (four times speed) erase ratio;

Fig. 3 is a graph showing the relationship between the recording linear velocity and the erase ratio for samples of an optical recording medium having the same configuration as that of the optical recording medium according to the Example 1 except that the composition of the interface layer is different; and

Fig. 4 is a graph showing jitter characteristics at 4X recording for a plurality of samples having different compositions of the interface layer as in Fig. 3.

The optical recording medium according to the best mode comprises a substrate, a first information layer provided in a laser beam incident side of the substrate, and a semi-transparent information layer provided in a beam incident side of the first information layer. The abovementioned semi-transparent information layer is configured to include a recording film and an interface layer which is provided adjacent to a beam incident side of this recording film. The abovementioned recording film is formed from a phase-change material. This phase-change material contains Sb as a main component and at least Ge as a minor component and is rewritable by means of an optical system in which λ / NA ≤ 650 nm (NA is the numerical aperture of an objective lens, and λ is the wavelength of a laser beam). The abovementioned interface layer is formed from ZnS, SiO₂, and Cr₂O₃.

Examples of the configuration of the abovementioned semi-transparent information layer include a configuration formed by laminating in sequence on a substrate a first dielectric layer, a reflection layer, a second dielectric layer, the recording film (layer), the interface layer, a third dielectric layer, and a heat sink layer.

The first dielectric layer is provided for protecting the reflection layer and for adjusting the light transmittance. No particular limitation is imposed on the material for the first dielectric layer, and examples of the material employed therefor include an oxide, a nitride, a sulfide, a carbide, a fluoride, and a combination thereof, each of which contains at least one metal selected from the group consisting of Ti, Zr, Hf, Ta, Si, Al, Mg, Y, Ce, Zn, In, Cr, Nb, and the like. In the best exemplary embodiment, the first dielectric layer is formed from a material containing zirconium oxide as a main component. As used herein, the main component refers to that the molar ratio thereof to the total moles is 60% or more. The film thickness D₁ of the first dielectric layer is preferably 1 nm ≤ D₁ ≤ 60 nm. If the film thickness is less than 1 nm, the protection of the reflection layer is insufficient. If the film thickness is larger than 60 nm, the light transmittance falls outside a preferred range.

The reflection layer is provided for heat dissipation and a light interference effect. Preferably, an Ag alloy is employed as the material for the reflection layer, and the film thickness Tr thereof is 0 < Tr < 30 nm in order to obtain a semi-transparent structure. More preferably, the film thickness is 0 < Tr < 20 nm. The preferred film thickness Trec of the recording film (layer) is 2 nm ≤ Trec ≤ 12 nm, and more preferably 2.5 nm ≤ Trec ≤ 8 nm.

By means of the above layers, the light transmittance of the semi-transparent information layer as a whole at a recording wavelength is adjusted to 30% or more and 80% or less. This is because, if the light transmittance of the semi-transparent information layer is less than 30%, a difficulty arises in recording to the information layer located farthest from a laser beam incident surface. In addition, if the light transmittance exceeds 80%, a difficulty arises in recording to the semi-transparent information layer. The above is a general condition required as a semi-transparent information layer.

The recording film (layer) is composed of at least Sb and Ge. In addition, the recording film (layer) may contain at least one additive component selected from the group consisting of Mg, Al, Si, Mn, Zn, Ga, Sn, Bi, In, and the like.

The preferred atomic ratio of Sb is 77.2 ≤ Sb ≤ 88, and more preferably 81 ≤ Sb ≤ 88. If the content of Sb is less than 77.2 at%, the crystallization rate is decreased to cause difficulty in erasing a mark. Further, the thermal stability of the mark is deteriorated. The preferred atomic ratio of Ge is 10 ≤ Ge ≤ 22, and more preferably 10 ≤ Ge ≤ 21. If the content of Ge is less than 10 at%, the thermal stability of the mark is deteriorated. Further, if the content of Ge exceeds 21 at%, the crystallization rate is decreased to cause difficulty in erasing. The preferred atomic ratio of the at least one additive component such as Mg and the like is 1 at% or more and 3.9 at% or less. If the content of the additive component is less than 1 at%, a noise reduction effect is not obtained. Further, if the content thereof is larger than 3.9 at%, the crystallization rate is decreased to cause difficulty in erasing.

The second dielectric layer protects the recording layer and the reflection layer and controls heat dissipation from the recording layer to the reflection layer. No particular limitation is imposed on the material for the second dielectric layer, and examples of the material employed therefore include an oxide, a nitride, a sulfide, a carbide, a fluoride, and a combination thereof, each of which contains at least one metal selected from the group consisting of Ti, Zr, Hf, Ta, Si, Al, Mg, Y, Ce, Zn, In, Cr, Nb, and the like. In the exemplary embodiment of the present invention, the second dielectric layer is formed from a material containing zirconium oxide as a main component. The main component refers to that the molar ratio thereof to the total moles is 60% or more. The film thickness D₂ of the second dielectric layer is preferably 2 nm ≤ D₂ ≤ 20 nm. If the film thickness is less than 2 nm, the protection of the recording layer and the reflection layer is insufficient. If the film thickness is larger than 20 nm, the heat from the recording layer is not rapidly dissipated to the reflection layer, and thus the cooling rate is decreased to cause difficulty in the accurate formation of the amorphous mark.

The interface layer controls the crystallization rate. ZnS, SiO₂, and Cr₂O₃ are employed for the interface layer. Particularly Cr₂O₃ can improve the crystallization rate. The film thickness Ti of the interface layer is 0.5 nm ≤ Ti ≤ 8 nm. If the film thickness of the interface layer is less than 0.5 nm, a rewritable maximum linear velocity is not attained. If the film thickness is larger than 8 nm, the rewritable maximum linear velocity is improved, but the light transmittance of the semi-transparent information layer decreases due to light absorption by Cr₂O₃.

The third dielectric layer adjusts the optical characteristics and controls heat dissipation from the recording layer to the heat sink layer. No particular limitation is imposed on the material for the third dielectric layer, and examples of the material employed therefor include an oxide, a nitride, a sulfide, a carbide, a fluoride, and a combination thereof, each of which contains at least one metal selected from the group consisting of Ti, Zr, Hf, Ta, Si, Al, Mg, Y, Ce, Zn, In, Cr, Nb, and the like. Preferably, the third dielectric layer is formed from a mixture of ZnS and SiO₂. The preferred molar ratio of ZnS to SiO₂ is 50:50 to 95:5. If the molar ratio falls outside this range, the refractive index of the mixture of ZnS and SiO₂ is changed to cause difficulty in the adjustment of the optical characteristics. The film thickness D₃ of the third dielectric layer is preferably 5 nm ≤ D₃ ≤ 50 nm. If the film thickness is less than 5 nm, a difficulty arises in the protection of the recording layer and the adjustment of the optical characteristics. If the film thickness is larger than 50 nm, the heat dissipation from the recording layer to the heat sink layer is less effective.

The heat sink layer controls the heat dissipation from the recording layer and is provided for enhancing the cooling effect of the recording layer to thereby facilitate the accurate formation of the amorphous mark. No particular limitation is imposed on the material for the heat sink layer, but a material having a thermal conductivity higher than that of the material for the third dielectric layer is preferable. Specifically, the material for the heat sink layer is preferably AlN, SiN, BN, Al₂O₃, TiO₂, or the like. In the best exemplary embodiment, the heat sink layer is made of AlN. The preferred film thickness Theat of the heat sink layer is 15 nm ≤ Theat < 150 nm, and more preferably 20 nm ≤ Theat < 120 nm. If the film thickness of the heat sink layer is less than 15 nm, the heat dissipation effect from the recording layer becomes weaker. Further, if the film thickness is equal to, or larger than, 150 nm, the time required for deposition becomes longer to cause the reduction in productivity.

Moreover, the first, second, and third dielectric layers may be constituted by a single layer or two or more dielectric layers.

### [Example 1]

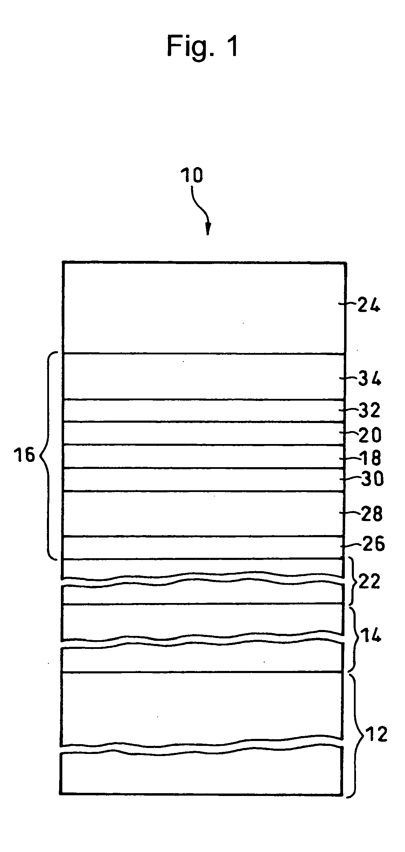

Hereinafter, an optical recording medium 10 according to Example 1 of the present invention will be described in detail with reference to Fig. 1.

This optical recording medium 10 includes a substrate 12, a first information layer 14 which is provided in a laser beam incident side of the substrate 12 (the upper side in Fig. 1), and a second information layer 16 which serves as a semi-transparent information layer and is provided in a beam incident side of the first information layer 14. The abovementioned second information layer 16 is configured to include a recording film 18 and an interface layer 20 provided adjacent to a beam incident side of the recording film 18.

A spacer layer 22 is provided between the abovementioned first information layer 14 and the second information layer 16, and a semi-transparent layer 24 is provided in a beam incident side of the abovementioned second information layer 16.

The abovementioned second information layer 16 is configured to have: a first dielectric layer 26 formed from, for example, a ZrO₂ film having a film thickness of 5 nm; a reflection layer 28 formed from, for example, a AgPdCu (98:1:1 at%) film having a film thickness of 10 nm; a second dielectric layer 30 formed from, for example, a ZrO₂ film having a film thickness of 5 nm; the abovementioned recording film 18 having a film thickness of 6 nm; the abovementioned interface layer 20 formed from, for example, a ZnS:SiO₂:Cr₂O₃ film having a film thickness of 5 nm; a third dielectric layer 32 formed from, for example, a ZnS:SiO₂ (80:20 mol%) film having a film thickness of 15 nm; and a heat sink layer 34 formed from , for example, an AlN film having a film thickness of 50 nm. The above layers are formed by means of sputtering in the above order from the side of the spacer layer 22.

In addition, the abovementioned substrate 12 is made of polycarbonate having a thickness of 1.1 mm, and the spacer layer 22 has a thickness of 25 µm. The abovementioned semi-transparent layer 24 is formed in a thickness of 75 µm by use of a UV curable resin by means of a spin-coating method. This semi-transparent layer 24 is formed after the abovementioned second information layer is crystallized entirely by means of an initialization apparatus.

In the Example 1, SbGe (87.0:13.0 at%) is employed for the material of the abovementioned recording film 18.

The optical recording medium 10 according to the Example 1 was evaluated for record-erase characteristics by use of a laser beam having a wavelength of 405 nm by means of an evaluation apparatus provided with an optical system having NA = 0.85. The evaluation was performed by use of a (1, 7) RLL modulation signal as a recording signal under the conditions of a linear velocity of 19.68 m/s (four times speed) and a clock frequency of 264 MHz. Reproduction was performed at a linear velocity of 4.92 m/s. In addition, a sample stored at 80°C and 85%RH for 50 hours was observed using an optical microscope for peeling of the film.

The evaluation results for the peeling of the film, for the erasing characteristics, and for jitter are shown in Table 1 for each of samples 1 to 10 prepared by changing the composition of the interface layer in the optical recording medium satisfying the abovementioned conditions. Here, if the erase rate when an 8T signal was DC-erased once at four times speed (4X) is 25 dB or more, a circle is given. If this erase rate is less than 25 dB, a cross is given. For 4X jitter, if a jitter value at tenth recording time of a mixed signal is less than 9%, a circle is given. Further, a triangle is given if this jitter value is 9% or more and less than 12%, and a cross is given if this jitter value is 12% or more. In addition, a cross is given if the peeling of the film occurs, and a circle is given if the peeling of the film does not occur.

**Table 1**

| Sample | ZnS (mol%) | SiO₂ (mol%) | Cr₂O₃ (mol%) | 4X erase ratio | 4X jitter | Peeling of film |
|---|---|---|---|---|---|---|
| 1 | 80 | 20 | 0 | × | × | ○ |
| 2 | 74 | 18 | 8 | × | × | ○ |
| 3 | 66 | 17 | 17 | Δ | Δ | O |
| 4 | 59 | 15 | 26 | ○ | Δ | ○ |
| 5 | 49 | 12 | 39 | ○ | ○ | ○ |
| 6 | 39 | 10 | 51 | ○ | ○ | ○ |
| 7 | 26 | 7 | 67 | ○ | ○ | ○ |
| 8 | 11 | 3 | 86 | ○ | ○ | ○ |
| 9 | 6 | 2 | 92 | ○ | ○ | × |
| 10 | 0 | 0 | 100 | ○ | ○ | × |

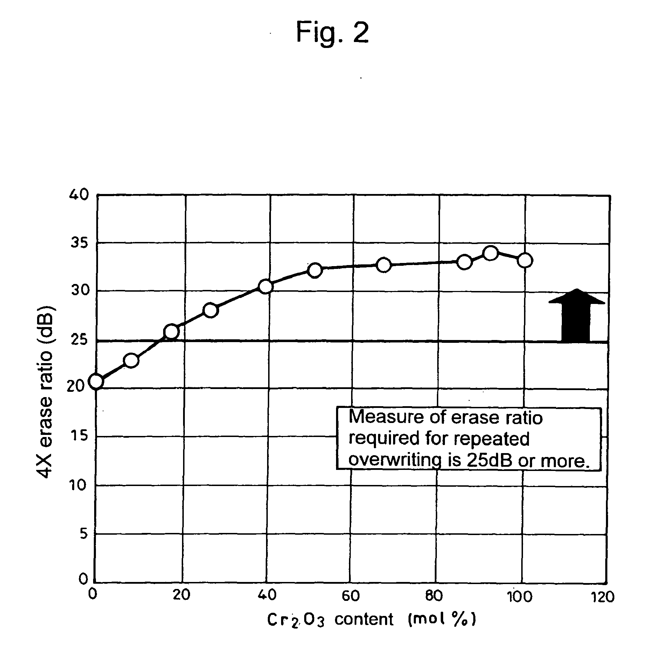

Moreover, the relationship between the content of Cr₂O₃ in Table 1 and the 4X erase ratio is shown in Fig. 2. When the erase ratio is 25 dB, the content of Cr₂O₃ is 15 mol%.

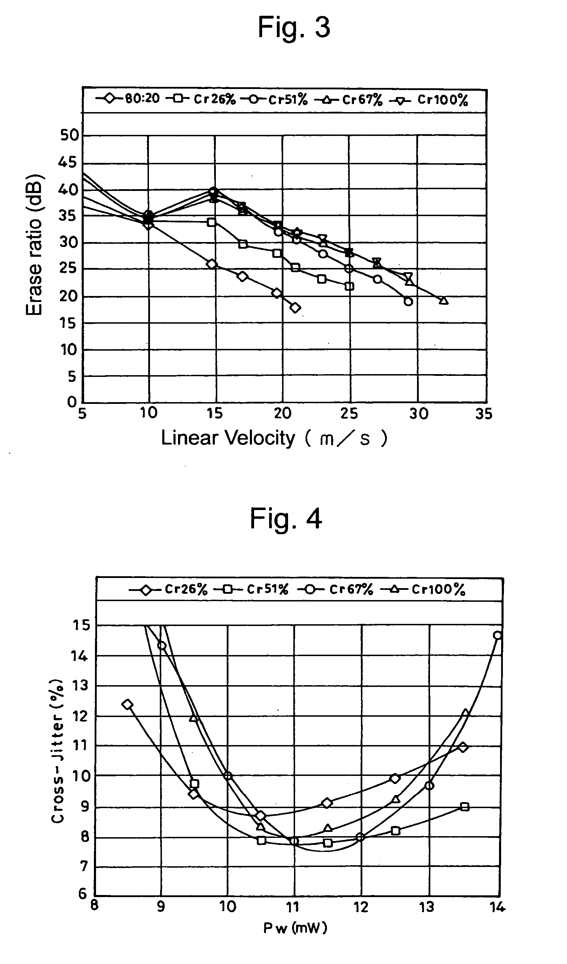

Fig. 3 shows the change of the DC-erase ratio when the linear velocity is changed during erasing for the abovementioned samples 1, 4, 6, 7, and 10. As can be seen from Fig. 3, in the samples 4, 6, 7, and 10, an erase ratio of 25 dB or more is obtained at four times speed (a linear velocity of 19.68 m/s).

In addition, Fig. 4 shows jitter characteristics at 4X recording for the samples 4, 6, 7, and 10. As can be seen from Fig. 4, excellent recording characteristics in which the jitter value is 9% or less are obtained in a region in which a recording power falls within a certain range.

Next, the 4X erase ratio, the 4X jitter, and the degree of modulation were measured by changing the film thickness of the interface layer in the abovementioned optical recording medium, and the results are shown in Table 2. In this case, the composition of ZnS: SiO₂: Cr₂O₃ was 26: 7: 67 (mol%).

The evaluation criteria for the abovementioned 4X erase ratio and the 4X jitter were the same as those in Table 1 above. For the degree of modulation, a circle is given when the degree of modulation is 35% or more. Further, a triangle is given when the degree of modulation is 30% or more and less than 35%, and a cross is given when the degree of modulation is less than 30%. The degree of modulation was determined by recording a random pattern signal followed by measurement of reflectivity in a crystal portion (a non-recorded portion) and in an amorphous portion (a recorded portion). Specifically, the degree of modulation is given by ((the reflectivity of the crystal portion) - (the reflectivity of the amorphous portion)) / (the reflectivity of the crystal portion) x 100.

**Table 2**

| ZnS : SiO₂: Cr₂O₃ film thickness (nm) | 4X erase ratio | 4X jitter | Degree of modulation |
|---|---|---|---|
| 0 | × | × | ○ |
| 0. 3 | Δ | Δ | ○ |
| 0. 4 | ○ | Δ | ○ |
| 0.5 | ○ | ○ | ○ |
| 1 | ○ | ○ | ○ |
| 3 | ○ | ○ | ○ |
| 5 | ○ | ○ | ○ |
| 8 | ○ | ○ | ○ |
| 9 | ○ | ○ | Δ |
| 10 | ○ | ○ | Δ |
| 13 | ○ | Δ | × |

As can be seen from above, when the composition of the interface layer is {(ZnS)_{0.8}(SiO₂)_{0.2}}_{(100-X)}(Cr₂O₃)ₓ, wherein 39 ≤ X ≤ 86, and when the film thickness is 0.5 nm or more and 8 nm or less, high speed recording can be achieved without deteriorating the 4X erase ratio and the 4X jitter characteristics, and the peeling of the film does not occur.

### [Example 2]

In Example 2, optical recording mediums (samples 11 to 21) similar to those in the Example 1 were prepared by changing the composition of a SbGeMg recording film. Subsequently, as in the above, after an 8T mark was recorded, the erase ratio when the 8T mark was erased once at a DC erase power of 4 mW was measured while the linear velocity was changed. By means of the relationship between this erasing linear velocity and the erase ratio, a linear velocity giving an erase ratio of 25 dB which serves as a measure of erasability was determined. This erasable maximum linear velocity serves as a rewritable maximum linear velocity. The larger this value, the faster the recording can be performed.

The measurement results are shown in Table. 3. As can be seen from Table 3, in the sample 11, the erasing was possible even at a linear velocity of 40 m/s, but a part of signal reproduction marks after the formation of recording marks were crystallized to cause reproduction deterioration. This may be caused by the reduction in the thermal stability of the amorphous since the crystallization rate is too high.

**Table 3**

| Sample | Composition (at%) | | | Erasable maximum linear velocity (m/s) |
|---|---|---|---|---|
| | Sb | Ge | Mg | |
| 11 | 91.0 | 7.0 | 2.0 | >40 |
| 12 | 88.0 | 10 | 2.0 | 39 |
| 13 | 86.2 | 9.9 | 3.9 | 18.4 |
| 14 | 85.9 | 13.1 | 1.0 | 16.6 |
| 15 | 84.9 | 13.2 | 1.9 | 27 |
| 16 | 84.6 | 11.6 | 3.8 | 18.2 |
| 17 | 82.9 | 15.2 | 1.9 | 16 |
| 18 | 81.0 | 17.2 | 1.8 | 11.8 |
| 19 | 79.0 | 19.2 | 1.8 | 8.5 |
| 20 | 77.2 | 21.0 | 1.8 | 5.5 |
| 21 | 76.2 | 22.0 | 1.8 | Unerasable |

Further, in the sample 21, the marks were unable to be erased. This may be caused by the significant reduction in the crystallization rate. As can be seen from the above results, the preferred content of Sb falls within the range of from 77.2 at% to 88 at%, and the preferred content of Ge falls within the range of from 9.9 at% to 21 at%.

In addition, according to other experiments performed by the present inventor, when the content of Mg is less than 1 at%, a noise reduction effect was not attained. When the content of Mg is more than 3.9 at%, the crystallization rate was decreased. Therefore, the content of Mg is 1 at% or more and 3.9 at% or less.

In the above Examples, a DVD standard was employed in which a laser wavelength λ of 405 nm and a numerical aperture NA of the objective lens of 0.85 were employed. However, all the above characteristics were the same as those of a DVD standard in which λ = 405 nm and NA = 0.65. In addition, in the above Examples, the optical recording medium having the two information layers was employed, but the present invention is not limited thereto. The invention is applicable to an optical recording medium having three or more recording layers.

## Claims

1. An optical recording medium comprising: a substrate; a first information layer provided in a laser beam incident side of the substrate; and at least one semi-transparent information layer provided in a beam incident side of the first information layer, the semi-transparent information layer being configured to include a recording film and an interface layer which is provided adjacent to a beam incident side of this recording film, the recording film being formed from a phase-change material which is rewritable by means of an optical system in which λ / NA ≤ 650 nm, NA being a numerical aperture of an objective lens, λ being a wavelength of a laser beam, wherein
the recording film contains Sb as a main component and at least Ge as a minor component, and the interface layer is formed from ZnS, SiO₂, and Cr₂O₃.

2. The optical recording medium according to claim 1, wherein a content of Cr₂O₃ in the interface layer is 15 mol% or more and 90 mol% or less.

3. The optical recording medium according to claim 1, wherein the recording film contains Sb in an amount of 77.2 at% or more and 88 at% or less and Ge in an amount of 9.9 at% or more and 21 at% or less.

4. The optical recording medium according to claim 2, wherein the recording film contains Sb in an amount of 77.2 at% or more and 88 at% or less and Ge in an amount of 9.9 at% or more and 21 at% or less.

5. The optical recording medium according to any one of claims 1 to 4, wherein the recording film contains Mg as an additive component in an amount of 1 at% or more and 3.9 at% or less.

6. The optical recording medium according to any one of claims 1 to 4, wherein a film thickness of the interface layer is 0.4 nm or more and 9 nm or less.

7. The optical recording medium according to any one of claims 1 to 4, wherein a film thickness of the interface layer is 0.5 nm or more and 8 nm or less.

8. The optical recording medium according to any one of claims 1 to 4, wherein a composition of the interface layer is {(ZnS)_{0.8}(SiO₂)_{0.2}}_{(100-X)}(Cr₂O₃)_{X} and 39 ≤ X ≤ 86.

9. The optical recording medium according to claim 5, wherein a composition of the interface layer is {(ZnS)_{0.8}(SiO₂)_{0.2}}_{(100-X)}(Cr₂O₃)_{X} and 39 ≤ X ≤ 86.

10. The optical recording medium according to claim 6, wherein a composition of the interface layer is {(ZnS)_{0.8}(SiO₂)_{0.2}}_{(100-X)}(Cr₂O₃)_{X} and 39 ≤ X ≤ 86.
